# EUROPÄISCHE PATENTSCHRIFT

(11) **EP 3 930 950 B1**
(45) Veröffentlichungstag und Bekanntmachung des Hinweises auf die Patenterteilung: **20.12.2023**
(21) Anmeldenummer: 20705395.0
(22) Anmeldetag: 25.02.2020
(51) Int. Cl.: B23K 9/073, B23K 9/08, B23K 9/095, B23K 9/20, B23K 9/09

(54) **BOLZENSCHWEISSVERFAHREN UND BOLZENSCHWEISSVORRICHTUNG ZUM VERSCHWEISSEN EINES BOLZENS MIT EINEM WERKSTÜCK**
STUD WELDING PROCESS AND STUD WELDING DEVICE FOR WELDING A STUD TO A WORKPIECE
PROCÉDÉ DE SOUDAGE DE GOUJONS ET DISPOSITIF DE SOUDAGE DE GOUJONS PERMETTANT DE SOUDER UN GOUJON À UNE PIÈCE

(30) Priorität: 27.02.2019 EP 19159636
(43) Veröffentlichungstag der Anmeldung: 05.01.2022
(73) Patentinhaber: HILTI Aktiengesellschaft, 9494 Schaan (LI)
(72) Erfinder: STARZENGRUBER, Andreas, 4643 Pettenbach (AT); DÖRNER, Philipp, 4643 Pettenbach (AT)
(74) Vertreter: Hilti Aktiengesellschaft Corporate Intellectual Property
(86) Internationale Anmeldenummer: PCT/EP2020/054938
(87) Internationale Veröffentlichungsnummer: WO 2020/173957

(56) Entgegenhaltungen:
- WO-A1-2014/140739
- DE-A1-102017 211 725
- DE-C1- 10 221 387
- DE-U1-202013 011 903

## Beschreibung

Die Erfindung betrifft ein Bolzenschweißverfahren zum Verschweißen eines Bolzens mit einem Werkstück, wobei mit Hilfe eines gepulsten Schweißstroms zwischen der dem Werkstück zugewandten Fläche des Bolzens und dem Werkstück ein Lichtbogen erzeugt wird, und der Lichtbogen mit Hilfe eines Magnetfelds, das durch eine von einem Strom durchflossenen Spule erzeugt wird, abgelenkt wird.

Weiters betrifft die Erfindung eine Bolzenschweißvorrichtung zum Verschweißen eines Bolzens mit einem Werkstück, mit einer Schweißstromquelle zur Bereitstellung eines gepulsten Schweißstroms zur Erzeugung eines Lichtbogens zwischen der dem Werkstück zugewandten Fläche des Bolzens und dem Werkstück, und mit einer Spule zur Erzeugung eines Magnetfelds zur Ablenkung des Lichtbogens.

Die Erfindung bezieht sich auf ein Bolzenschweißverfahren und eine Bolzenschweißvorrichtung, wobei ein Bolzen mit einem Werkstück verschweißt wird. Dabei wird zwischen der dem Werkstück zugewandten Stirnseite des Bolzens und dem Werkstück ein Lichtbogen gezündet und dadurch sowohl der Bolzen als auch das Werkstück lokal angeschmolzen. Anschließend wird der Bolzen unter geringem Anpressdruck mit dem Werkstück verbunden. Auf diese Weise können bspw. Gewinde, Bolzen, Buchsen, Haken oder Ösen mit größeren Werkstücken verbunden werden.

Dadurch, dass sich der Lichtbogen zwischen der Stirnfläche des Bolzens und dem Werkstück nicht gleichmäßig über den gesamten Querschnitt des Bolzens und dem darunter angeordneten Teil des Werkstücks verteilt, kommt es zu einem ungleichmäßigen Anschmelzen der Stirnfläche des Bolzens und des Werkstücks, wodurch die Qualität der Schweißverbindung beeinträchtigt werden kann.

Ein allgemeines Bolzenschweißverfahren ist beispielsweise aus der DE 10 2007 039 308 A1bekanntgeworden. Die Anwendung eines Magnetfeldes zum Ablenken des Lichtbogens zur Verbesserung des Anschmelzens der Stirnfläche des Bolzens wird darin nicht erwähnt.

Zur Abhilfe existieren Verfahren und Vorrichtungen, durch welche der Lichtbogen mithilfe eines Magnetfelds abgelenkt wird. Bspw. beschreibt die EP 1 649 962 B1 ein Verfahren und System zum Verschweißen eines Bolzens aus Vollmaterial mit einer kegelförmigen, leicht geneigten Stirnfläche, wobei durch Anlegen eines Quermagnetfelds ein spiralförmiges Überstreichen der gesamten Stirnfläche des Bolzens durch den Lichtbogen und in der Folge ein gleichmäßiges Aufschmelzen der gesamten Stirnfläche erzielt werden kann. Das spiralförmige Überstreichen des Lichtbogens über die gesamte Stirnfläche des Bolzens wird durch die spezielle Gestaltung der Stirnfläche erzielt. Nachteilig dabei ist, dass der mit dem Werkstück zu verbindende Bolzen eine bestimmte Form aufweisen muss und kein beliebiger Bolzen für das Schweißverfahren verwendet werden kann.

Die DE 102 21 387 C1 beschreibt ein anderes Bolzenschweißverfahren, bei dem durch eine asymmetrische Anordnung der Spule zur Erzeugung des den Lichtbogen ablenkenden Magnetfelds Verbesserungen erzielt werden können, insbesondere die Schweißstelle besser einsehbar ist.

Abgesehen von den oben genannten Bolzenschweißverfahren treten ähnliche Probleme auch bei allgemeinen Schweißverfahren auf, da der Lichtbogen immer dazu tendiert sich in Richtung Masseanschluss des Werkstücks zu orientieren bzw. von großen Massen abgelenkt wird. Durch eine symmetrische Anordnung mehrerer Masseanschlüsse des Werkstücks kann dieses Problem zwar verhindert werden, bei einer Bewegung des Schweißbrenners gegenüber des Werkstücks kommt es jedoch wieder zu Abweichungen der Lage des Lichtbogens und dadurch zu einer möglichen unregelmäßigen Aufschmelzung des Schweißdrahts und Werkstücks.

Beispielsweise beschreibt die DE 20 2013 011 903 U1 ein Lichtbogenschweißsystem mit einem abschmelzenden Schweißdraht, bei dem mit Hilfe eines Magnetfelds das schmelzflüssige Tröpfchen vom Schweißdrahtende gelöst oder bewegt wird und der Lichtbogen bei Bedarf nach vorne oder hinten bewegt wird, um die Schweißpfütze zu verlängern. Die Aufgabe der vorliegenden Erfindung besteht in der Schaffung eines oben genannten Bolzenschweißverfahrens und einer oben genannten Bolzenschweißvorrichtung zum Verschweißen eines Bolzens mit einem Werkstück, durch welche eine möglichst gleichmäßige Verteilung des Lichtbogens zwischen der Stirnfläche des Bolzens und dem darunter liegenden Werkstück resultiert, wodurch der Bolzen und das Werkstück gleichmäßig aufgeschmolzen werden kann und in der Folge eine optimale Schweißverbindung resultiert. Besondere Anforderungen an den Bolzen sollen nicht notwendig sein. Das gegenständliche Bolzenschweißverfahren und die gegenständliche Bolzenschweißvorrichtung soll möglichst einfach und kostengünstig realisierbar sein. Nachteile des Standes der Technik sollen vermieden oder zumindest reduziert werden.

Die DE 10 2017 211725 A1, welche die Basis für den Oberbegriff der unabhängigen Ansprüche bildet, beschreibt ein Verfahren zur Herstellung einer Schweißverbindung mit Hilfe eines Schweißstroms, welcher einen Lichtbogen erzeugt. Zur Ablenkung des Lichtbogens werden wenigstens drei Werkstückverbindungen verwendet, die entlang einer Ringform um die Schweißstelle herum elektrisch leitend mit dem Werkstück verbunden angeordnet sind. Der Schweißstrom fließt in einer der Ringform umlaufend folgenden Reihenfolge nacheinander über die wenigstens drei Werkstückkontaktierungen. Dadurch soll eine magnetische Spule zur Ablenkung des Lichtbogens entbehrlich werden.

Die DE 20 2013 011903 U1 beschreibt eine synchronisierte magnetische Lichtbogenlenkung und Schweißung mit Hilfe eines Schweißsystems. Das Schweißsystem umfasst eine Schweißstromversorgung zur Erzeugung eines Lichtbogens, eine Magnetfeldstromversorgung und eine Magnetlenkungsvorrichtung. Die Magnetlenkungsvorrichtung ist neben dem Lichtbogen positioniert und verwendet das Magnetfeldstromsignal, um ein Magnetfeld zu erzeugen, um den Lichtbogen während des Schweißens zu bewegen. Das Magnetfeldstromsignal umfasst mehrere Magnetstromimpulse, welche mit Bezug auf den Schweißstrom synchronisiert werden.

Die WO 2014/140739 A1 beschreibt ein Tandem-Schweißdraht-Schweißsystem. Das Schweißsystem umfasst einen ersten Schweißdraht, welcher mit Hilfe eines Schweißbrenners mit einem Schweißstrom beaufschlagt wird, um einen Lichtbogen zwischen dem ersten Schweißdraht und einem Werkstück zu erzeugen. Das Schweißsystem umfasst ferner einen zweiten Schweißdraht, welcher mit einem Heizstrom beaufschlagt wird. Mittels einer Steuerung des Heizstroms wird eine Position des Lichtbogens beeinflusst.

Die Aufgabe der Erfindung wird in verfahrensmäßiger Hinsicht dadurch gelöst, dass der Strom durch die Spule zur Erzeugung des Magnetfels zur Ablenkung des Lichtbogens synchron und gegengleich zum Schweißstrom angesteuert wird, indem die Spule zur Erzeugung des Magnetfelds zur Ablenkung des Lichtbogens immer dann mit einem Strom beaufschlagt wird, wenn der Schweißstrom minimal bzw. gering ist und die Ablenkspule abgeschaltet bzw. der Strom durch die Spule auf ein Minimum reduziert wird, wenn der Schweißstrom maximal bzw. höher ist. Es hat sich gezeigt, dass der Lichtbogen durch das Quermagnetfeld leichter beeinflussbar ist, wenn er mit weniger Leistung bzw. einem niedrigeren Strom betrieben wird, wohingegen die Beeinflussung des Lichtbogens mit höherer Energie bzw. zu Zeiten höheren Schweißstroms nicht so leicht möglich ist. Durch die erfindungsgemäße synchrone und gegengleiche Ansteuerung des Spulenstroms kann somit eine optimale Position des Lichtbogens bei gleichzeitig niedrigem Verfahrensaufwand erzielt werden. In der Folge resultiert durch die gleichmäßige Materialaufschmelzung eine höhere Qualität der Schweißverbindung. Eine spezielle Gestaltung des Bolzens, von dem der Lichtbogen zum Werkstück gezündet wird, ist im Gegensatz zum oben genannten Stand der Technik nicht erforderlich. Auch genügt nur ein Masseanschluss am Werkstück, dessen Lage nicht besonders beachtet werden muss.

Der Schweißstrom wird vorzugsweise mit einer Pulsfrequenz zwischen 10 Hz und 1000 Hz, insbesondere zwischen 50 Hz und 150 Hz, gepulst. Derartige Werte sind bei Schweißverfahren gemäß dem Stand der Technik üblich.

Gemäß einem weiteren Merkmal der Erfindung ist vorgesehen, dass der Schweißstrom zwischen einem oberen Schwellwert und einem unteren Schwellwert oder die Schweißleistung zwischen einem oberen Wert und einem unteren Wert verändert wird. Der obere Schwellwert des Schweißstroms wird an die jeweiligen Gegebenheiten und an die entsprechende Schweißaufgabe angepasst, um ein möglichst rasches Anschmelzen erzielen zu können. Der untere Schwellwert des Schweißstroms wird vorzugsweise so gewählt, dass der Lichtbogen während des Schweißprozesses aufrecht erhalten werden kann. Dadurch erfolgt eine Regelung auf konstanten Schweißstrom. Bei einer Regelung auf konstante Schweißleistung werden die entsprechenden oberen und unteren Schwellwerte für die Schweißleistung vorgegeben. Der Schweißstrom stellt sich dann aufgrund der geregelten Schweißleistung ein.

Der Tastgrad bzw. Duty Cycle des Schweißstroms beträgt zwischen 10% und 90%, insbesondere 50%. Die Auswahl des Tastgrads erfolgt einerseits nach dem Gesichtspunkt einer möglichst hohen Energieeinbringung in den Lichtbogen, andererseits nach Maßgabe einer leichteren Beeinflussbarkeit der Lage des Lichtbogens in den Phasen mit geringerem Schweißstrom. Ein Tastgrad von 50% ist hier ein optimaler Kompromiss, allerdings können geänderte Tastgrade für spezielle Anwendungen von Vorteil sein.

Vorteilhafterweise wird der Schweißstrom für eine konstante Schweißleistung, vorzugsweise zwischen 2 kW und 10 kW, geregelt. Da die Wärmeeinbringung in den Lichtbogen und somit in die anzuschmelzenden Teile maßgeblich von der Leistung des Lichtbogens abhängt, ist eine derartige Regelung auf konstante Leistung von Vorteil. Änderungen in der Lichtbogenspannung werden somit durch eine Veränderung des Schweißstroms ausgeglichen, sodass eine konstante Schweißleistung resultiert.

Der Strom durch die Spule kann mit einem zeitlichen Offset gegenüber dem Schweißstrom angelegt werden. Durch eine derartige Phasenverschiebung des Spulenstroms gegenüber dem Schweißstrom in geringem Ausmaß, bspw. um einige Prozent der Periodendauer, kann eine bessere Beeinflussung des Lichtbogens erreicht werden. Bei einer negativen Phasenverschiebung des Spulenstroms gegenüber dem Schweißstrom kann früher das Maximum des Spulenstromes erzielt werden.

Weitere Vorteile können sich dadurch ergeben, dass der Strom durch die Spule eine vorgegebene Zeitspanne nach Beginn des Schweißstroms und bzw. oder eine vorgegebene Zeitspanne vor dem Ende des Schweißstroms abgeschaltet wird. Durch das Vorsehen derartiger Zeitspannen nach dem Beginn des Schweißverfahrens und vor der Beendigung des Schweißverfahrens kann eine verbesserte Beeinflussung des Lichtbogens durch das Quermagnetfeld erzielt werden. Durch das Einfügen einer Zeitspanne nach dem Beginn des Schweißverfahrens ist die Stabilität des Lichtbogens verbessert und die Position des Lichtbogens fixiert. Wenn das Quermagnetfeld bereits vor dem Ende des Schweißverfahrens abgeschaltet wird, kann ein besseres und stabileres Ende des Schweißverfahrens erzielt werden.

Der Strom durch die Spule zur Erzeugung des Magnetfelds zur Ablenkung des Lichtbogens kann mit einem DC-Offset gepulst werden. Wenn der Strom durch die Spule zur Erzeugung des Magnetfelds zur Ablenkung des Lichtbogens in den Phasen des hohen Schweißstroms nicht komplett abgeschaltet wird, sondern mit einem geringen Offset betrieben wird, kann eine gewisse Grundmagnetisierung der Spule erzielt werden.

Die Anstiegsgeschwindigkeit des Stroms durch die Spule kann beispielsweise durch die Amplitude der an die Spule angelegten Spannung, sowie die Induktivität der Spule verändert werden. Durch eine geringere Anstiegsgeschwindigkeit ist das Pulsen des Schweißstroms mit einer höheren Pulsfrequenz möglich.

Wenn vor Beginn des Schweißverfahrens eine Vorstromphase, vor zugsweise zwischen 1 ms und 100 ms, eingelegt wird, kann eine Verbesserung des Verfahrens durch eine Vorwärmung erzielt werden. Ebenso stabilisiert sich der Lichtbogen dadurch und der Lichtbogen reißt beim Pulsen nicht sofort ab. Aus dem zeitlichen Verlauf des Stroms durch die Spule kann eine maximale Pulsfrequenz des Schweißstroms ermittelt werden. Bspw. kann durch das Ableiten der Zeitkonstante aus dem Verlauf des Spulenstroms nach dem ersten Strompuls oder nach einigen Strompulsen auf die maximal mögliche Pulsfrequenz des Schweißstroms rückgerechnet werden und das Schweißverfahren auf diese ermittelte maximale Pulsfrequenz begrenzt werden.

Gelöst wird die erfindungsgemäße Aufgabe auch durch eine oben genannte Bolzenschweißvorrichtung, bei der eine Steuerungseinrichtung zur Steuerung des Stroms durch die Spule zur Erzeugung eines Magnetfelds zur Ablenkung des Lichtbogens synchron und gegengleich zum gepulsten Schweißstrom vorgesehen ist, sodass die Spule immer dann mit einem Strom beaufschlagt wird, wenn der Schweißstrom minimal bzw. gering ist, und die Spule abgeschaltet oder der Strom durch die Spule auf ein Minimum reduziert wird, wenn der Schweißstrom maximal bzw. höher ist. Die gegenständliche Bolzenschweißvorrichtung ist besonders einfach und kostengünstig realisierbar, da bloß die Einrichtung zur Erzeugung des Spulenstroms mit der Schweißstromquelle synchronisiert werden muss, was durch eine ohnedies in einer üblichen Schweißvorrichtung enthaltenen Steuerungseinrichtung bzw. einem Mikrocontroller einfach implementiert werden kann. Zu den weiteren durch die Bolzenschweißvorrichtung erzielbaren Vorteilen wird auf die obige Beschreibung des Bolzenschweißverfahrens verwiesen.

Die Schweißstromquelle ist vorteilhafterweise zur Regelung des Schweißstroms für eine konstante Schweißleistung, vorzugsweise zwischen 2 kW und 10 kW, ausgebildet. Durch die Konstanthaltung der Schweißleistung und somit der in den Lichtbogen eingebrachten Energie wird eine gleichmäßige Aufschmelzung des Bolzens und des Werkstücks und somit eine gleichbleibende Qualität der Schweißverbindung erzielt.

Bei einer besonders bevorzugten Bolzenschweißvorrichtung ist ein Bolzenhalter zur Aufnahme des mit dem Werkstück zu verbindenden Bolzens und eine Hubvorrichtung zum Abheben des Bolzens vom Werkstück gegen die Kraft einer Feder vorgesehen. Wie bereits oben erwähnt, kann durch die gegenständliche Bolzenschweißvorrichtung eine gleichmäßige Aufschmelzung der dem Werkstück zugewandten Seite des Bolzens oder Ringbolzens durch die Beeinflussung der Lage des Lichtbogens erzielt werden.

Die Steuerungseinrichtung kann zur Ermittlung einer maximalen Pulsfrequenz des Schweißstroms aus dem zeitlichen Verlauf des Stroms durch die Spule ausgebildet sein. Wie bereits oben erwähnt, kann durch die Analyse der Kurvenform des Stroms durch die Spule zur Erzeugung des Magnetfelds zur Ablenkung des Lichtbogens bzw. durch Bestimmung der Zeitkonstanten bzw. der Anstiegsgeschwindigkeit auf eine maximale Pulsfrequenz rückgerechnet werden.

Die Erfindung wird anhand der beigefügten Zeichnungen näher erläutert. Darin zeigen:
- Fig. 1: ein Blockschaltbild einer Bolzenschweißvorrichtung zum Verschweißen eines Bolzens mit einem Werkstück mit einer Spule zur Erzeugung eines Magnetfelds zur Ablenkung des Lichtbogens;
- Fig. 2: die zeitlichen Verläufe des gepulsten Schweißstroms und des erfindungsgemäß gesteuerten Stroms durch die Spule zur Erzeugung des Magnetfelds zum Ablenken des Lichtbogens gemäß einem ersten Ausführungsbeispiel;
- Fig. 3: die zeitlichen Verläufe des Schweißstroms, der Schweißspannung, der gepulsten Schweißleistung und des Stroms durch die Spule zur Erzeugung des Magnetfelds zum Ablenken des Lichtbogens gemäß einem weiteren Ausführungsbeispiel mit Leistungsregelung;
- Fig. 4: die zeitlichen Verläufe des Schweißstroms, der Schweißspannung, der Schweißleistung und des Stroms durch die Spule zur Erzeugung des Magnetfelds zum Ablenken des Lichtbogens gemäß einem weiteren Ausführungsbeispiel mit einer zeitlichen Verzögerung des Spulenstroms;
- Fig. 5: drei Varianten des zeitlichen Verlaufs des Stroms durch die Spule zur Erzeugung des Magnetfelds zur Ablenkung des Lichtbogens mit drei verschiedenen Anstiegsgeschwindigkeiten; und
- Fig. 6: den zeitlichen Verlauf des Stroms durch die Spule zur Erzeugung des Magnetfelds zur Ablenkung des Lichtbogens zur Erklärung der Ermittlung der maximalen Pulsfrequenz des Schweißstroms.

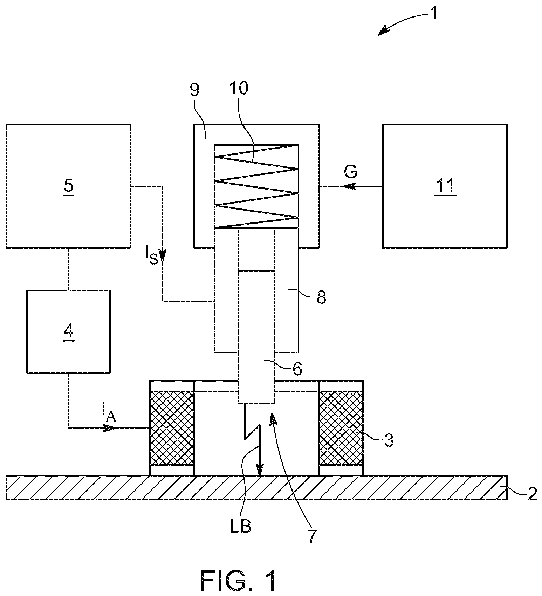

Fig. 1 zeigt ein Blockschaltbild einer Bolzenschweißvorrichtung 1 zum Verschweißen eines Bolzens 6 mit einem Werkstück 2 mit einer Spule 3 zur Erzeugung eines Magnetfelds zur Ablenkung des Lichtbogens LB. Die Bolzenschweißvorrichtung 1 beinhaltet einen Bolzenhalter 8 zur Aufnahme des Bolzens 6, der mit einer entsprechenden Hubvorrichtung 9 verbunden ist. Die Hubvorrichtung 9 kann durch einen Hubmagnet gebildet sein, der den Bolzenhalter 8 zusammen mit dem Bolzen 6 gegen die Kraft einer Feder 10 vom Werkstück 2 abhebt. Anstelle der Feder 10 kann die Hubvorrichtung 9 auch durch einen Doppelhubmagnet gebildet sein, der den Bolzen 9 sowohl vom Werkstück 2 abhebt als auch an das Werkstück 2 presst (nicht dargestellt). Der Bolzen 6 wird von einer Schweißstromquelle 5 mit einem Schweißstrom Iₛ beaufschlagt, wo durch zwischen der dem Werkstück 2 zugewandten Fläche 7 des Bolzens 6 und dem Werkstück 2 ein Lichtbogen LB gezündet wird. Die Position des Lichtbogens LB ändert sich während des Schweißverfahrens sehr unbestimmt, wodurch es zu einer unterschiedlichen Aufschmelzung der Fläche 7 des Bolzens 6 und des Werkstücks 2 kommt und nach dem Anpressen des Bolzens 6 an das Werkstück 2 zu einer unterschiedlichen Qualität der Schweißverbindung. Zur Beeinflussung der Lage des Lichtbogens LB ist eine Spule 3 um die Schweißstelle angeordnet zur Erzeugung eines Magnetfelds, welches quer zum Lichtbogen LB orientiert ist und diesen örtlich ablenkt. Bei einer unkontrollierten Steuerung des Spulenstromes I_{A} kann die Position des Lichtbogens LB nicht gezielt beeinflusst werden. Bei der gegenständlichen Erfindung hingegen wird die Spule 3 durch eine Steuerungseinrichtung 4 (Spulenstromquelle) mit einem Strom I_{A} beaufschlagt, der synchron und gegengleich zum Schweißstrom Iₛ gesteuert ist. Dadurch resultiert eine intensivere Wirkung auf die Position des Lichtbogens LB und eine gleichmäßigere Aufschmelzung der Fläche 7 des Bolzens 6 und des Werkstücks 2.

Die Schweißvorrichtung 1 zeichnet sich durch relativ einfache und kostengünstige Realisierung aus. Allenfalls kann ein Gasspeicher 11 vorgesehen sein, der die Schweißstelle mit einem entsprechenden Schutzgas G versorgt. Der Schweißstrom Iₛ und der Strom I_{A} durch die Spule 3 sind auch allgemein Schweißparameter, welche gemäß der Erfindung eingestellt, angesteuert, geregelt oder dgl. werden. Selbstverständlich kann die Erfindung auch ausgeführt werden, wenn andere Schweißparameter, wie die Schweißleistung Pₛ und bzw. oder zeitliche Parameter verändert werden.

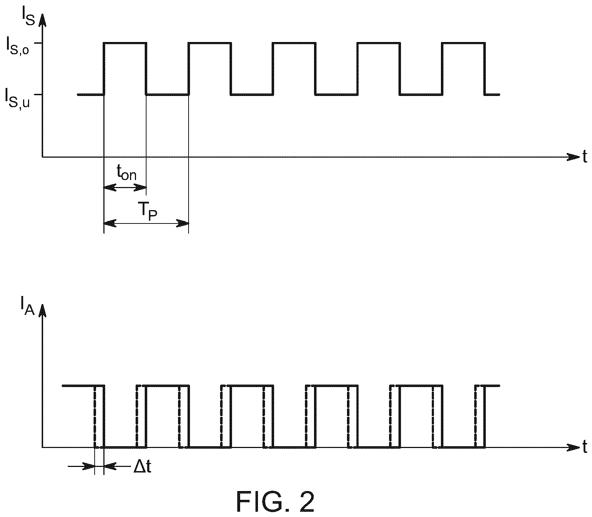

Fig. 2 zeigt die zeitlichen Verläufe des gepulsten Schweißstroms Iₛ und des erfindungsgemäß gesteuerten Stroms I_{A} durch die Spule 3 zur Erzeugung des Magnetfelds zum Ablenken des Lichtbogens LB gemäß einem ersten Ausführungsbeispiel. Der Schweißstrom Iₛ wird zwischen einem oberen Schwellwert des Schweißstroms I_{S,0} und einem unteren Schwellwert des Schweißstroms I_{S,U} gewechselt. Im dargestellten Ausführungsbeispiel wird ein oberer Schwellwert des Schweißstroms I_{S,0} während der Zeit tₒₙ und ein unterer Schwellwert des Schweißstroms I_{S,U} während der Restzeit zur Periodendauer T_{P} aufrecht erhalten. Im dargestellten Beispiel beträgt die Einschaltzeit tₒₙ die Hälfte der Periodendauer T_{P}, gleichbedeutend mit einem Tastgrad bzw. Duty Cyle von 50%. Bei diesem Ausführungsbeispiel wird auf einen konstanten Schweißstrom Iₛ geregelt, sodass sich in Abhängigkeit der Schweißspannung Uₛ über dem Lichtbogen LB eine Schweißleistung Pₛ einstellt.

Erfindungsgemäß wird der Strom I_{A} durch die Spule 3 synchron und gegengleich zum gepulsten Schweißstrom Iₛ angesteuert. Während der Zeit tₒₙ des oberen Schwellwerts des Schweißstroms I_{S,O} ist der Spulenstrom I_{A} Null oder minimal, wohingegen der Spulenstrom I_{A} maximal ist, wenn der Schweißstrom Iₛ auf dem unteren Schwellwert I_{s,u} liegt. Dadurch wird eine optimale Beeinflussung der Lage des Lichtbogens LB erzielt.

Durch eine geringfügige Phasenverschiebung des Spulenstroms I_{A} gegenüber dem Schweißstrom Iₛ um einen zeitlichen Offset Δt kann das Maximum des Spulenstromes I_{A} früher erreicht werden.

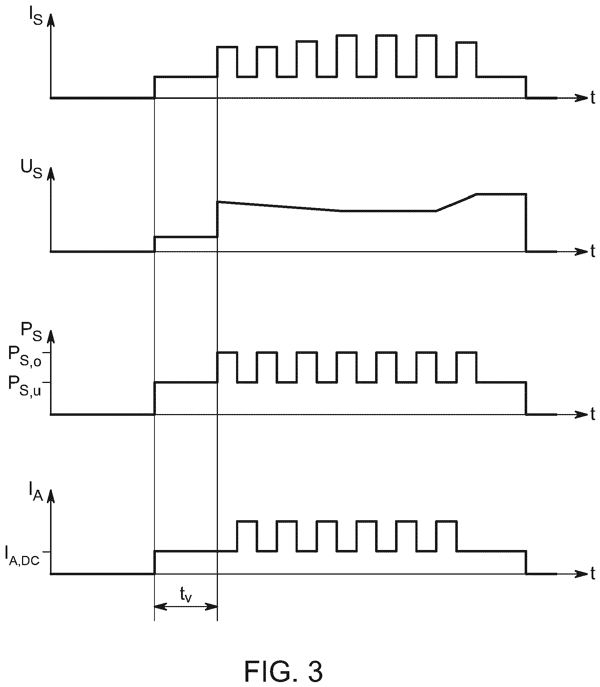

Fig. 3 zeigt die zeitlichen Verläufe des Schweißstroms Iₛ, der Schweißspannung Uₛ, der gepulsten Schweißleistung Pₛ und des Stroms I_{A} durch die Spule 3 zur Erzeugung des Magnetfelds zum Ablenken des Lichtbogens LB gemäß einem weiteren Ausführungsbeispiel mit Leistungsregelung. Bei diesem Ausführungsbeispiel erfolgt eine Regelung auf eine konstante Schweißleistung Pₛ, indem der Schweißstrom Iₛ in Abhängigkeit der Schweißspannung Uₛ entsprechend verändert wird. Bei einer Reduktion der Lichtbogen- bzw. Schweißspannung Uₛ wird der Schweißstrom Iₛ angehoben, wohingegen bei einem Anstieg der Schweißspannung Uₛ der Schweißstrom Iₛ gesenkt wird, resultierend in einer konstanten mittleren Schweißleistung Pₛ. Der Strom I_{A} durch die Spule 3 wird entsprechend gegengleich und synchron zum Schweißstrom Iₛ gesteuert. Anstelle einer Abschaltung der Spule 3, gleichbedeutend mit einem Spulenstrom I_{A} = 0 (siehe Fig. 2) kann auch ein gewisser Gleichanteil oder DC-Offset I_{A,DC} an die Spule 3 angelegt werden. Vor Beginn des Schweißverfahrens kann eine Vorstromphase mit einer Dauer tᵥ eingeschoben werden.

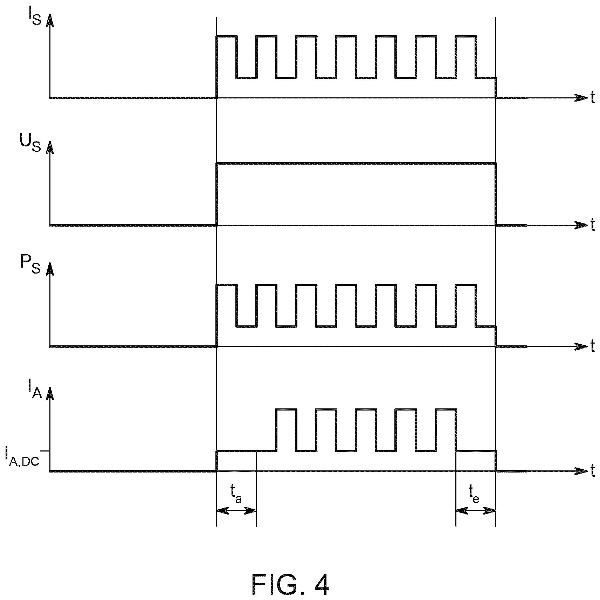

Fig. 4 zeigt die zeitlichen Verläufe des Schweißstroms Iₛ, der Schweißspannung Uₛ, der Schweißleistung Pₛ und des Stroms I_{A} durch die Spule 3 zur Erzeugung des Magnetfelds zum Ablenken des Lichtbogens LB gemäß einem weiteren Ausführungsbeispiel. Hier existiert keine Vorstromphase mit einer Dauer tᵥ wie bei Fig. 3, sodass das Schweißverfahren und die erfindungsgemäße sychron gegengleiche Ansteuerung des Stromes I_{A} sofort gestartet wird. Wie dargestellt, kann aber die Ansteuerung des Stroms I_{A} durch die Spule 3 zur Erzeugung des Magnetfelds zum Ablenken des Lichtbogens LB mit einer zeitlichen Verzögerung gestartet und eine vorgegebene Zeitdauer früher beendet werden. Der Spulenstrom I_{A} kann um eine voreingestellte Zeitspanne tₐ nach dem Beginn des Schweißverfahrens verzögert eingeschaltet und um eine voreingestellte Zeitspanne tₑ vor der Beendigung des Schweißverfahrens abgeschaltet werden. Während der Zeitspannen tₐ und tₑ kann der Strom I_{A} durch die Spule 3 einem gewissen Gleichanteil oder DC-Offset I_{A,DC} entsprechen, der beispielsweise 10%-20% des maximalen Stroms I_{A} betragen kann. Der Strom I_{A} durch die Spule 3 kann während der Zeitspannen tₐ und tₑ auch Null betragen. Unabhängig vom Wert des Stromes I_{A} wird durch das Einlegen der Zeitspanne tₐ nach dem Beginn des Schweißverfahrens eine bessere Stabilität des Lichtbogens LB erreicht. Die Ablenkung des Lichtbogens LB wird also verzögert gestartet. Ein stabileres Ende des Schweißverfahrens kann durch Einlegen einer voreingestellte Zeitspanne tₑ vor der Beendigung des Schweißverfahrens erreicht werden, in dem die Ablenkung des Lichtbogens LB frühzeitig beendet wird. Aus den Fig. 3 und 4 ist also ersichtlich, dass es für die Erfindung nicht wesentlich ist, ob auf einen konstanten Schweißstrom Iₛ oder auf eine konstante Schweißleistung Pₛ geregelt wird, da die relevanten Pulse des Schweißstroms Iₛ identisch auch in der Schweißleistung Pₛ vorhanden sind. Wichtig ist, dass die Pulse des Stroms I_{A} durch die Spule 3 synchron gegengleich sowohl zu den Pulsen des Schweißstroms Iₛ als auch zu den Pulsen der Schweißleistung Pₛ sind.

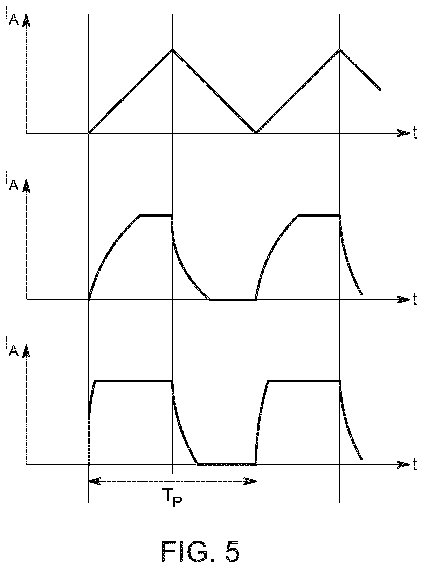

Fig. 5 zeigt drei Varianten des zeitlichen Verlaufs des Stroms I_{A} durch die Spule 3 zur Erzeugung des Magnetfelds zur Ablenkung des Lichtbogens mit drei verschiedenen Anstiegsgeschwindigkeiten tᵣ. Im obersten Zeitdiagramm der Fig. 5 steigt der Spulenstrom I_{A} mit einer sehr langsamen Anstiegsgeschwindigkeit an, resultierend in einem quasi dreieckförmigen Verlauf des Spulenstroms. Durch Anlegen einer höheren Spannung bzw. Veränderung der Induktivität der Spule 3, kann eine höhere Anstiegsgeschwindigkeit gemäß dem zweiten Zeitdiagramm erreicht werden. Im letzten Zeitverlauf wird ein nahezu rechteckförmiger Verlauf des Spulenstroms I_{A} mit einer besonders geringen Anstiegsgeschwindigkeit erzielt.

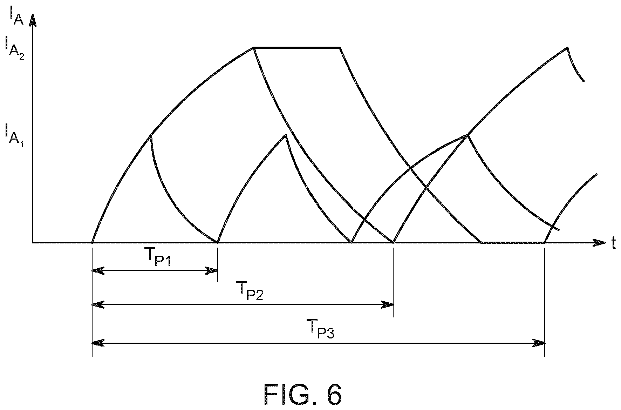

Fig. 6 zeigt den zeitlichen Verlauf des Stroms durch die Spule zur Erzeugung des Magnetfelds zur Ablenkung des Lichtbogens zur Erklärung der Ermittlung der maximalen Pulsfrequenz des Schweißstroms. Durch Ermittlung der Zeitkonstante bzw. Anstiegsgeschwindigkeit des Spulenstroms I_{A} kann auf die maximal erzielbare Pulsfrequenz f_{P} rückgerechnet werden. In Abhängigkeit der Amplitude des Spulenstroms I_{A} resultieren unterschiedliche maximale Periodenzeiten T_{P} bzw. unterschiedliche maximale Pulsfrequenzen f_{P} = 1/T_{P}. Beim Beispiel mit niedrigerer Amplitude I_{A1} resultiert eine geringere Periodendauer T_{PP} bzw. höhere maximale Pulsfrequenz f_{P1} = 1/T_{P1}. Bei einer höheren Amplitude des Stromes I_{A2} durch die Spule 3 resultiert eine höhere Periodendauer T_{P2} gleichbedeutend mit einer niedrigeren maximalen Pulsfrequenz f_{P}. Im dritten Beispiel mit der höheren Amplitude des Stromes I_{A2} wird der Strom I_{A} nicht gleich nach Erreichen des Maximums I_{A2} wieder abgeschaltet, sondern eine gewisse Zeit das Maximum I_{A2} aufrechterhalten. Dadurch resultiert die Periodendauer T_{P3} bzw. die Pulsfrequenz f_{P3} = 1/Tr₃.

## Patentansprüche

1. Bolzenschweißverfahren zum Verschweißen eines Bolzens (6) mit einem Werkstück (2), wobei mit Hilfe eines gepulsten Schweißstroms (Iₛ) zwischen der dem Werkstück (2) zugewandten Fläche (7) des Bolzens (6) und dem Werkstück (2) ein Lichtbogen (LB) erzeugt wird, und der Lichtbogen (LB) mit Hilfe eines Magnetfelds, das durch eine von einem Strom (I_{A}) durchflossenen Spule (3) erzeugt wird, abgelenkt wird, wobei der Strom (I_{A}) durch die Spule (3) zur Erzeugung des Magnetfels zur Ablenkung des Lichtbogens (LB) synchron und gegengleich zum Schweißstrom (Iₛ) angesteuert wird, **dadurch gekennzeichnet, dass** die Spule (3) immer dann mit einem Strom (I_{A}) beaufschlagt wird, wenn der Schweißstrom (Iₛ) minimal ist, und die Spule (3) abgeschaltet oder der Strom (I_{A}) durch die Spule (3) auf ein Minimum reduziert wird, wenn der Schweißstrom (Iₛ) maximal ist.

2. Bolzenschweißverfahren nach Anspruch 1, **dadurch gekennzeichnet, dass** der Schweißstrom (Iₛ) mit einer Pulsfrequenz (f_{P}) zwischen 10 Hz und 1000 Hz, insbesondere zwischen 50 Hz und 150 Hz, gepulst wird.

3. Bolzenschweißverfahren nach Anspruch 1 oder 2, **dadurch gekennzeichnet, dass** der Schweißstrom (Iₛ) zwischen einem oberen Schwellwert (I_{S D}) und einem unteren Schwellwert (I_{s,u}) oder die Schweißleistung (Pₛ) zwischen einem oberen Wert (P_{S D}) und einem unteren Wert (P_{s,u}) verändert wird.

4. Bolzenschweißverfahren nach einem der Ansprüche 1 bis 3, **dadurch gekennzeichnet, dass** der Tastgrad des Schweißstroms (Iₛ) zwischen 10% und 90%, insbesondere 50% beträgt.

5. Bolzenschweißverfahren nach einem der Ansprüche 1 bis 4, **dadurch gekennzeichnet, dass** der Schweißstrom (Iₛ) für eine konstante Schweißleistung (Pₛ), vorzugsweise zwischen 2 kW und 10 kW, geregelt wird.

6. Bolzenschweißverfahren nach einem der Ansprüche 1 bis 5, **dadurch gekennzeichnet, dass** der Strom (I_{A}) durch die Spule (3) mit einem zeitlichen Offset (At) gegenüber dem Schweißstrom (Iₛ) angelegt wird.

7. Bolzenschweißverfahren nach einem der Ansprüche 1 bis 6, **dadurch gekennzeichnet, dass** der Strom (I_{A}) durch die Spule (3) eine vorgegebene Zeitspanne (tₐ) nach dem Beginn des Schweißstroms (Iₛ) und bzw. oder eine vorgegenene Zeitspanne (tₑ) vor dem Ende des Schweißstroms (Iₛ) abgeschaltet wird.

8. Bolzenschweißverfahren nach einem der Ansprüche 1 bis 7, **dadurch gekennzeichnet, dass** der Strom (I_{A}) durch die Spule (3) mit einem DC-Offset (I_{A,Dc}) gepulst wird.

9. Bolzenschweißverfahren nach einem der Ansprüche 1 bis 8, **dadurch gekennzeichnet, dass** die Anstiegsgeschwindigkeit (tᵣ) des Stroms (I_{A}) durch die Spule (3) verändert wird.

10. Bolzenschweißverfahren nach einem der Ansprüche 1 bis 9, **dadurch gekennzeichnet, dass** vor Beginn des Schweißverfahrens eine Vorstromphase (tᵥ), vorzugsweise zwischen 1 ms und 100 ms, eingelegt wird.

11. Bolzenschweißverfahren nach einem der Ansprüche 1 bis 10, **dadurch gekennzeichnet, dass** aus dem zeitlichen Verlauf des Stroms (I_{A}) durch die Spule (3) eine maximale Pulsfrequenz (f_{P inax}) des Schweißstroms (Iₛ) ermittelt wird.

12. Bolzenschweißvorrichtung (1) zum Verschweißen eines Bolzens (6) mit einem Werkstück (2), mit einer Schweißstromquelle (5) zur Bereitstellung eines gepulsten Schweißstroms (Iₛ) zur Erzeugung eines Lichtbogens (LB) zwischen der dem Werkstück (2) zugewandten Fläche (7) des Bolzens (6) und dem Werkstück (2), und mit einer Spule (3) zur Erzeugung eines Magnetfelds zur Ablenkung des Lichtbogens (LB), **dadurch gekennzeichnet, dass** eine Steuerungseinrichtung (4) zur Steuerung des Stroms (I_{A}) durch die Spule (3) synchron und gegengleich zum gepulsten Schweißstrom (Iₛ) vorgesehen ist, sodass die Spule (3) immer dann mit einem Strom (I_{A}) beaufschlagbar ist, wenn der Schweißstrom (Iₛ) minimal ist, und die Spule (3) abgeschaltet oder der Strom (I_{A}) durch die Spule (3) auf ein Minimum reduziert wird, wenn der Schweißstrom (Iₛ) maximal ist.

13. Bolzenschweißvorrichtung (1) nach Anspruch 12, **dadurch gekennzeichnet, dass** die Schweißstromquelle (5) zur Regelung des Schweißstroms (Iₛ₎ für eine konstante Schweißleistung vorzugsweise zwischen 2 kW und 10 kW, ausgebildet ist.

14. Bolzenschweißvorrichtung (1) nach Anspruch 12 oder 13, **dadurch gekennzeichnet, dass** ein Bolzenhalter (8) zur Aufnahme des mit dem Werkstück (2) zu verbindenden Bolzens (6) und eine Hubvorrichtung (9) zum Abheben des Bolzens (6) vom Werkstück (2) gegen die Kraft einer Feder (10) vorgesehen ist.

15. Bolzenschweißvorrichtung (1) nach Anspruch 14, **dadurch gekennzeichnet, dass** die Steuerungseinrichtung (4) zur Ermittlung einer maximalen Pulsfrequenz (f_{P,max}) des Schweißstroms (Iₛ₎ aus dem zeitlichen Verlauf des Stroms (I_{A}) durch die Spule (3) ausgebildet ist.

## Claims

1. Stud welding process for welding a stud (6) to a workpiece (2), wherein an arc (LB) is generated between the surface (7) of the stud (6) that faces towards the workpiece (2) and the workpiece (2) by means of a pulsed welding current (Iₛ), and the arc (LB) is deflected by means of a magnetic field which is generated by a coil (3) through which a current (I_{A}) flows, wherein the current (I_{A}) through the coil (3) for generating the magnetic field to deflect the arc (LB) is driven synchronously and in antiphase with respect to the welding current (Iₛ), **characterized in that** a current (I_{A}) is applied to the coil (3) each time the welding current (Iₛ) is minimal, and the coil (3) is switched off or the current (I_{A}) through the coil (3) is reduced to a minimum when the welding current (Iₛ) is maximal.

2. Stud welding process according to Claim 1, **characterized in that** the welding current (Iₛ) is pulsed with a pulse frequency (f_{P}) of between 10 Hz and 1000 Hz, in particular between 50 Hz and 150 Hz.

3. Stud welding process according to Claim 1 or 2, **characterized in that** the welding current (Iₛ) is varied between an upper threshold value (I_{S D}) and a lower threshold value (I_{s,u}) or the welding power (Pₛ) is varied between an upper value (P_{S D}) and a lower value (P_{s,u}).

4. Stud welding process according to one of Claims 1 to 3, **characterized in that** the duty cycle of the welding current (Iₛ) is between 10% and 90%, in particular 50%.

5. Stud welding process according to one of Claims 1 to 4, **characterized in that** the welding current (Iₛ) is regulated for a constant welding power preferably between 2 kW and 10 kW.

6. Stud welding process according to one of Claims 1 to 5, **characterized in that** the current (I_{A}) through the coil (3) is applied with a time offset (At) relative to the welding current (Iₛ).

7. Stud welding process according to one of Claims 1 to 6, **characterized in that** the current (I_{A}) through the coil (3) is switched off a predetermined time interval (tₐ) after the start of the welding current (Iₛ) and/or a predetermined time interval (tₑ) before the end of the welding current (Iₛ).

8. Stud welding process according to one of Claims 1 to 7, **characterized in that** the current (I_{A}) through the coil (3) is pulsed with a DC offset (I_{A,DC}) .

9. Stud welding process according to one of Claims 1 to 8, **characterized in that** the rate of rise (tᵣ) of the current (I_{A}) through the coil (3) is varied.

10. Stud welding process according to one of Claims 1 to 9, **characterized in that** a precurrent phase (tᵥ), preferably between 1 ms and 100 ms, is interposed before the start of the welding process.

11. Stud welding process according to one of Claims 1 to 10, **characterized in that** a maximum pulse frequency (f_{P inax}) of the welding current (Iₛ) is ascertained from the profile of the current (I_{A}) through the coil (3) as a function of time.

12. Stud welding device (1) for welding a stud (6) to a workpiece (2), having a welding current source (5) for providing a pulsed welding current (Iₛ) to generate an arc (LB) between the surface (7) of the stud (6) that faces towards the workpiece (2) and the workpiece (2), and having a coil (3) for generating a magnetic field to deflect the arc (LB), **characterized in that** a control instrument (4) is provided in order to control the current (I_{A}) through the coil (3) synchronously and in antiphase with respect to the pulsed welding current (Iₛ), so that a current (I_{A}) can be applied to the coil (3) each time the welding current (Iₛ) is minimal, and the coil (3) is switched off or the current (I_{A}) through the coil (3) is reduced to a minimum when the welding current (Iₛ) is maximal.

13. Stud welding device (1) according to Claim 12, **characterized in that** the welding current source (5) is configured to regulate the welding current (Iₛ₎ for a constant welding power preferably between 2 kW and 10 kW.

14. Stud welding device (1) according to Claim 12 or 13, **characterized in that** a stud holder (8) is provided for receiving the stud (6) to be connected to the workpiece (2) and a lifting device (9) is provided for raising the stud (6) from the workpiece (2) against the force of a spring (10).

15. Stud welding device (1) according to Claim 14, **characterized in that** the control instrument (4) is configured to ascertain a maximum pulse frequency (f_{P,max}) of the welding current (Iₛ) from the profile of the current (I_{A}) through the coil (3) as a function of time.

## Revendications

1. Procédé de soudage de goujon destiné à souder un goujon (6) à une pièce (2), un arc (LB) étant généré à l'aide d'un courant de soudage pulsé (Iₛ) entre la surface (7) du goujon (6), dirigée vers la pièce (2) et la pièce (2), et l'arc (LB) étant dévié à l'aide d'un champ magnétique qui est généré par une bobine (3) à travers laquelle circule un courant (I_{A}), le courant (I_{A}) étant commandé de manière synchrone et dans une direction opposée au courant de soudage (Iₛ) par la bobine (3) afin de générer le champ magnétique destiné à dévier l'arc (LB), **caractérisé en ce que** la bobine (3) n'est alimentée avec un courant (I_{A}) que lorsque le courant de soudage (Iₛ) est minimal et la bobine (3) est désactivée ou le courant (I_{A}) à travers la bobine (3) est réduit au minimum lorsque le courant de soudage (Iₛ) est maximal.

2. Procédé de soudage de goujon selon la revendication 1, **caractérisé en ce que** le courant de soudage (Iₛ) est pulsé avec une fréquence d'impulsion (f_{P}) comprise entre 10 Hz et 1000 Hz, notamment entre 50 Hz et 150 Hz.

3. Procédé de soudage de goujon selon la revendication 1 ou 2, **caractérisé en ce que** le courant de soudage (Iₛ) est compris entre une valeur seuil supérieure (I_{S D}) et une valeur seuil inférieure (I_{s,u}) ou la puissance de soudage (Pₛ) est modifiée entre une valeur supérieure (P_{S D}) et une valeur inférieure (P_{s,u}).

4. Procédé de soudage de goujon selon l'une des revendications 1 à 3, **caractérisé en ce que** le rapport cyclique du courant de soudage (Iₛ) est compris entre 10 % et 90 %, notamment est de 50 %.

5. Procédé de soudage de goujon selon l'une des revendications 1 à 4, **caractérisé en ce que** le courant de soudage (Iₛ) est régulé pour une puissance de soudage (Pₛ) constante, de préférence comprise entre 2 kW et 10 kW.

6. Procédé de soudage de goujon selon l'une des revendications 1 à 5, **caractérisé en ce que** le courant (I_{A}) est appliqué à travers la bobine (3) avec un décalage temporel (At) par rapport au courant de soudage (Iₛ).

7. Procédé de soudage de goujon selon l'une des revendications 1 à 6, **caractérisé en ce que** le courant (I_{A}) à travers la bobine (3) est désactivé pendant un intervalle de temps spécifié (tₐ) après le début du courant de soudage (Iₛ) et/ou un intervalle de temps spécifié (tₑ) avant la fin du courant de soudage (Iₛ).

8. Procédé de soudage de goujon selon l'une des revendications 1 à 7, **caractérisé en ce que** le courant (I_{A}) à travers la bobine (3) est pulsé avec un décalage continu (I_{A,Dc}).

9. Procédé de soudage de goujon selon l'une des revendications 1 à 8, **caractérisé en ce que** la vitesse de montée (tᵣ) du courant (I_{A}) à travers la bobine (3) est modifiée.

10. Procédé de soudage de goujon selon l'une des revendications 1 à 9, **caractérisé en ce qu'**une phase de courant de polarisation (tᵥ), de préférence comprise entre 1 ms et 100 ms, est insérée avant le début du procédé de soudage.

11. Procédé de soudage de goujon selon l'une des revendications 1 à 10, **caractérisé en ce qu'**une fréquence d'impulsion maximale (f_{P inax}) du courant de soudage (Iₛ) est déterminée à partir de l'évolution dans le temps du courant (I_{A}) à travers la bobine (3).

12. Dispositif de soudage de goujon (1) destiné à souder un goujon (6) à une pièce (2), ledit dispositif comprenant une source de courant de soudage (5) destinée à fournir un courant de soudage pulsé (Iₛ) afin de générer un arc (LB) entre la surface (7) du goujon (6), dirigée vers la pièce (2), et la pièce (2), et une bobine (3) destinée à générer un champ magnétique destiné à dévier l'arc (LB), **caractérisé en ce qu'**un module de commande (4) destiné à commander le courant (I_{A}) à travers la bobine (3) de manière synchrone et dans la direction opposée au courant de soudage pulsé (Iₛ) est prévu, de sorte que la bobine (3) ne puisse être alimentée par un courant (I_{A}) que lorsque le courant de soudage (Iₛ) est minimal, et la bobine (3) est désactivée ou le courant (I_{A}) à travers la bobine (3) est réduit au minimum lorsque le courant de soudage (Iₛ) est maximal.

13. Dispositif de soudage de goujon (1) selon la revendication 12, **caractérisé en ce que** la source de courant de soudage (5) est conçue pour une puissance de soudage (Pₛ) constante, de préférence comprise entre 2 kW et 10 kW, afin de réguler le courant de soudage (Iₛ).

14. Dispositif de soudage de goujon (1) selon la revendication 12 ou 13, **caractérisé en ce qu'**un support de goujon (8) est prévu pour recevoir le goujon (6) à relier à la pièce (2) et un dispositif de levage (9) est prévu pour soulever le goujon (6) de la pièce (2) en s'opposant à la force d'un ressort (10).

15. Dispositif de soudage de goujon (1) selon la revendication 14, **caractérisé en ce que** le module de commande (4) est conçu pour déterminer une fréquence d'impulsion maximale (f_{P,max}) du courant de soudage (Iₛ) à partir de l'évolution dans le temps du courant (I_{A}) à travers la bobine (3).
